Europäisches Patentamt

European Patent Office

Office européen des brevets

(11) Publication number: **0 200 798**
**B1**

# EUROPEAN PATENT SPECIFICATION

(45) Date of publication of patent specification: **25.01.89**

(21) Application number: **85105585.5**

(22) Date of filing: **07.05.85**

(51) Int. Cl.⁴: **B 01 D 29/06, B 01 D 46/52,
B 01 D 27/06, B 31 F 1/08**

(54) **Method for making a curved, corrugated article and apparatus therefor.**

(43) Date of publication of application:
**12.11.86 Bulletin 86/46**

(45) Publication of the grant of the patent:
**25.01.89 Bulletin 89/04**

(84) Designated Contracting States:
**DE FR IT SE**

(56) References cited:
**EP-A-0 058 994
GB-A- 819 832
GB-A-1 010 976
GB-A-1 100 532
US-A-4 201 119**

(73) Proprietor: **NIPPONDENSO CO., LTD.**
**1, 1-chome, Showa-cho
Kariya-shi Aichi-ken (JP)**

(72) Inventor: **Ito, Yuuji**
**83-9, Shindandome Sasame-cho
Anjo-shi Aichi-ken (JP)**
Inventor: **Shibata, Tadahiko**
**34-1, Nonomiya Hishiike
Kota-cho Nukata-gun Aichi-ken (JP)**
Inventor: **Sakai, Masahiko**
**12-3, Nakashima Takatori-cho
Takahama-shi Aichi-ken (JP)**
Inventor: **Ota, Yukio**
**10, Azaaraikou Doi-cho
Okazaki-shi Aichi-ken (JP)**
Inventor: **Kondo, Naohiko**
**4-8, Nakaokazaki-cho Okazaki-shi
Aichi-ken (JP)**
Inventor: **Matuyama, Harukazu**
**46-1, Nakashinden Yoshihama-cho
Takahama-shi Aichi-ken (JP)**

(74) Representative: **Klingseisen, Franz, Dipl.-Ing.
et al
Dr. F. Zumstein sen. Dr. E. Assmann Dr. F.
Zumstein jun. Dipl.-Ing. F. Klingseisen
Bräuhausstrasse 4
D-8000 München 2 (DE)**

Note: Within nine months from the publication of the mention of the grant of the European patent, any person may
give notice to the European Patent Office of opposition to the European patent granted. Notice of opposition shall
be filed in a written reasoned statement. It shall not be deemed to have been filed until the opposition fee has been
paid. (Art. 99(1) European patent convention).

Courier Press, Leamington Spa, England.

## Description

The invention relates to a method for making a curved corrugated article from a flat sheet of material according to the preamble of claim 1.

GB—A—1 100 532 discloses a method according to which a mesh material is arranged on a mold constituted by concentric rings. The mesh material abuts on the top ends of all rings of the mold, whereupon a centrally arranged upper die ring and concentring rings surrounding the die ring are lowered and inserted into the rings of the mold in such a manner that the die rings arranged in the center of the arrangement is inserted into the mold at first whereupon the other rings follow consecutively.

Further it is known from EP—A—0 058 994 to produce a filter element by using a sheet of filter material in the form of a trapezoid or a segment. The sheet is bent along lines substantially perpendicular to the center line to form parallel wave forms between the two ends and the bent filter material is curved in such a manner that one end is located on the inner peripheral side and the other end is located on the outer peripheral side of the curved filter material strip, whereupon the sides of the filter material are adhesively connected to provide a filter element of concentric circles.

Such a method is very time consuming and especially it is not possible to uniformly fold the corrugations since it relies on handwork of workers in the line. Therefore, the filtration performance varies from one to another and the appearance of the resultant filter is poor.

It is the object of the invention to improve a method of the above mentioned kind in such a way that a curved corrugated article, especially an axial-flow filter can be obtained in a practical and fast way. Further it is the object of the invention to provide an apparatus for such a method.

This object of the invention is achieved by the features in the characterizing part of claims 1 and 7.

The method is also useful in corrugating other materials than filter material such as fine metallic material or plastic material.

Further embodiments of the invention are described in the other claims.

Examples of the invention are explained in more detail in connection with the drawings.

Fig. 1 is a perspective view of a fan-shaped flat sheet of filter material,

Fig. 2 is a perspective view where the flat sheet of Fig. 1 is attached to a mold to produce a curved corrugated article,

Fig. 3 shows a perspective view of the flat sheet corrugated on the mold,

Fig. 4 is a perspective view where the curved corrugated article is placed on a center rod around which the article is made round,

Fig. 5 shows a perspective view of the final product of the axial-flow filter,

Fig. 6 shows a partial-cross-sectional side view of the apparatus to make the curved corrugated article from the flat sheet,

Fig. 7 shows a front view of a set of fixing blades which come down to the mold to fold the flat sheet consecutively,

Fig. 8 shows a cross-sectional view of the mold of a modified construction,

Fig. 9 shows a partial-cross-sectional front view of the apparatus to make the curved corrugated article circular,

Fig. 10 shows a bottom view of the apparatus shown in Fig. 9,

Fig. 11 shows a plane view of a reshaper mounted in the apparatus of Fig. 9,

Fig. 12 shows the curved corrugated article made circular in the apparatus of Fig. 9 at its initial condition, and

Fig. 13 shows a partial-cross-sectional front view of another modification of the apparatus shown in Fig. 9.

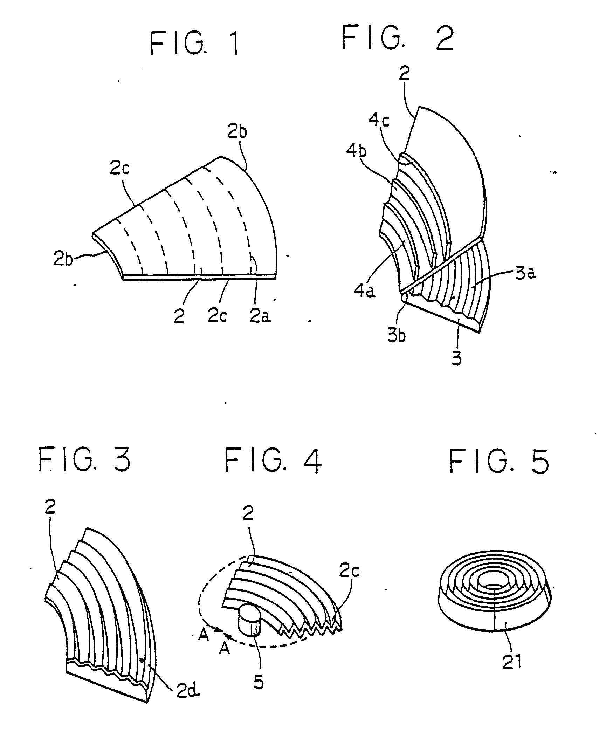

Fig. 1 shows a flat sheet of filter material 2 which is cut to be a fan-shaped configuration. The flat sheet has two curved edges 2b and two tapered side edges 2c, and also a set of curved depressions 2a which has the same curvature as the curved edges 2b on one side of the flat sheet of filter material 2. In Fig. 2, numeral 3 designates a mold which has a curved wavy surface 3a on one side thereof. The curved wavy surface 3a is made of valleys which have bottom edges and ridges which have top edges. The curved wavy surface 3a with the valleys and ridges is curved in a certain radius. The mold 3 also has a curved end 3b at the inner end thereof. The flat sheet of filter material 2 is fixed at the curved end 3b as shown in the figure, thus the flat sheet of filter material 2 is curved and raised from the curved wavy surface 3a like a part of a conical surface. On the flat sheet of filter material 2 thus slanted a set of fixing blades 4a, 4b and 4c is positioned. After that the set of fixing blades 4a, 4b and 4c is moved downward to fold the flat sheet of the filter material 2 along the upper face of the curved wavy surface 3a as shown in Fig. 3 to obtain a curved corrugated article 2d. The article 2d thus produced is positioned on a center rod 5 to round the article 2d afterwards along the dotted line A as shown in Fig. 4. When all the steps from Fig. 1 to Fig. 4 are worked out, and when the round article obtained in Fig. 4 is reshaped, the final product of the axial flow filter 21 is obtained as shown in Fig. 5.

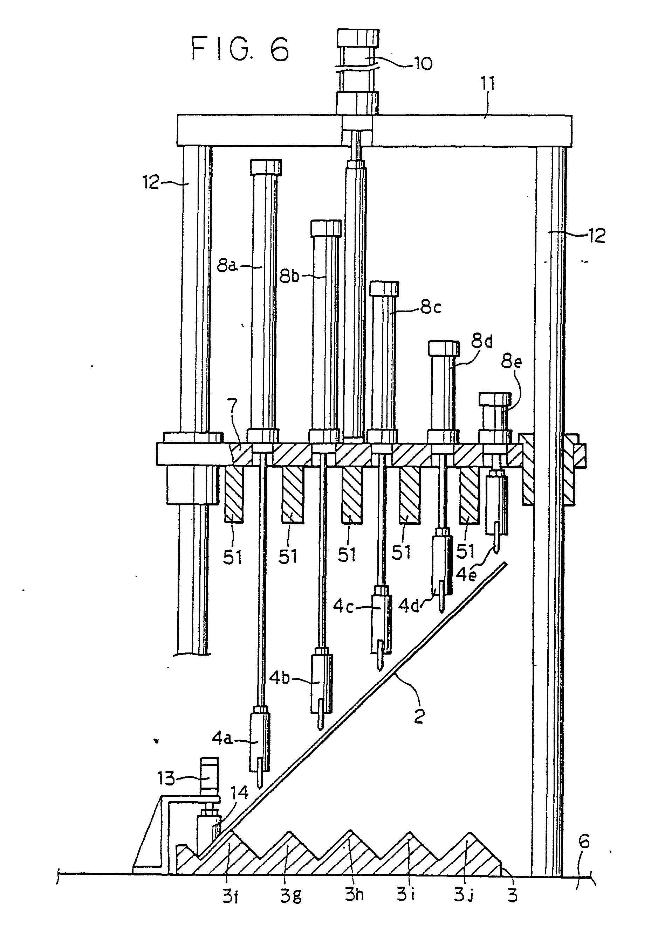

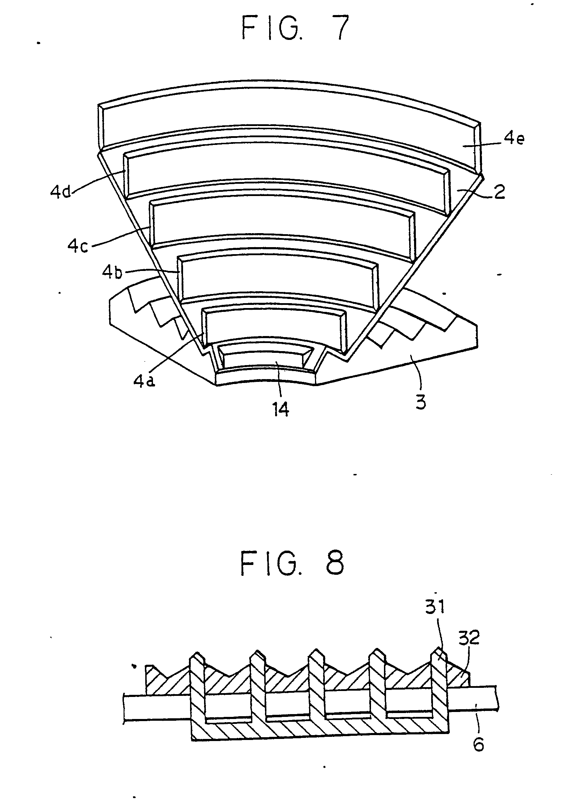

The steps of Figs. 2 and 3 are explained in detail in association with Figs. 6 and 7. The mold 3 has curved ridges 3f, 3g, 3h, 3i and 3j. The flat sheet of filter material 2 is fixed to the mold 3 at the curved end 3b by a clamper 14 to raise the flat sheet 2 as shown in Fig. 6. When the clamper 14 is located as shown in Fig. 6, the set of fixing blades 4a to 4e is positioned as shown in Fig. 6, i.e. each of the fixing blades is located close to the surface of the flat sheet 2. The clamper 14 is moved by an air cylinder 13 and fixing blades 4a to 4e are moved by air cylinders 8a, 8b, 8c, 8d and 8e. All the air cylinders 8a to 8e are fixed to a plate 7, therefore when the plate 7 is moved downward in Fig. 6, all the air cylinders 8a to 8e start to move down simultaneously. When the plate 7 is moved downward, the fixing blade 4a first folds the flat sheet 2 in such a manner that the blade 4a mates with the valley of the mold 3 between the ridges 3f and 3g. At that time the next fixing blade 4b is located on the flat sheet 2 to fold the next corrugation in a second. Likewise the succeeding blades 4c, 4d and 4e are moved downward to make the following corrugations on the mold 3. During the downward movement of the plate 7, i.e. the whole cylinders 8a to 8e, the stems of the fixing blades are inserted into the respective air cylinders. Since the initial positions of the fixing blades 4a to 4e are differentiated stepwise, a single downward movement on the plate 7 folds the flat sheet 2 consecutively at a high speed to obtain a curved corrugated article 2d on the mold 3. The plate 7 is supported and guided by guide columns 12 and moved by an oil cylinder 10 fixed to an upper beam 11. All these things are made on the base 6. Numeral 51 designates a heater that is located between the neighboring fixing blades. The heater 51 heats up the article 2d on the top edges of the curved ridges 3f to 3j to deform the sheet 2 permanently at those portions, when all the fixing blades 4a to 4e are moved down completely. The mold 3 may include a heater to heat up the article 2d made on the curved wavy surface 3a. With the aid of the heater 51 and the heater to be mounted in the mold 3, the article made on the mold 3 may be regidified to keep the shape of the article made on the mold 3. Although air cylinders are utilized for the stems of the fixing blades 4a to 4e, it is possible to replace the air cylinders with simple springs to absorve the movement of the stems and afterwards extend those stems again.

The relationship among the fixing blades 4a, 4b, 4c, 4d and 4e, flat sheet of filter material 2 and the mold 3 is as shown in Fig. 7. As is apparent from this figure, the flat sheet 2 is slanted upward from the inner end thereof and also makes a conical plane above the mold 3. The locations of the fixing blades 4a to 4e are indicated therein, i.e. each fixing blade is positioned just above the inclined conical plane of the flat sheet of the filter material 2. Each of the fixing blades 4a to 4e is also curved as the ridges 3f to 3j of the mold 3, since each blade must mate with each valley of the curved wavy surface of the mold 3. The edges of the fixing blades 4a to 4e are sharpened as indicated in this figure. Also, each blade becomes wider in lateral width as the width of the flat sheet 2 becomes wider.

In Figs. 6 and 7, the curved wavy surface of the mold 3 is made plane, i.e. the general lateral line of the ridges 3f to 3j is in parallel with the surface of the base 6, however it is possible to incline the general lateral line in respect of the surface of the base 6. If done so, the resultant article on the mold 3 would have a general lateral inclined line with respect to the base 6. To obtain the inclined article, the curved wavy surface of the mold 3 should be modified a little, i.e. the upward slope of the ridge 3f must be made longer than the downward slope of the ridge 3f, the upward slope of the ridge 3g must be longer than the downward slope of the ridge 3f, and again the downward slope of the ridge 3g must be shorter than the upward slope of the ridge 3g. If these arrangements are made on the curved wavy surface of the mold 3, it is possible to obtain an inclined article on the mold 3. In practical use for example in automobiles, an inclined article, i.e. a slightly conical axial-flow filter made by rounding the inclined article is better mounted in an air cleaner thereof since the inclined general line of the axial-flow filter produces a space through which the air can communicate with the intake system of the engine.

Fig. 8 shows another embodiment of the mold 3 where the mold 3 is divided into two parts, i.e. top mold 31 and base mold 32. The top mold 31 functions to form the top edges of the ridges 3f to 3j to enable to obtain various types of articles whose heights are different from each other. For example if the top mold 31 is raised a little from the base mold 32, the flat sheet of filter material 2 is folded deeply to obtain a larger height in the curved corrugation to be obtained thereon. By using this modified mold, it is possible to obtain various types of axial-flow filters in the same apparatus over all. Even if the height of the folding is differentiated from each other, the curved corrugation of any height can be obtained since the pitch of the corrugation or the pitch of the fixing blades 4a to 4e does not change at all.

An embodiment of the flat sheet filter material 2 is a three-ply filter material which has a coarse or low density material on top, a middle density material next, and at the bottom a high density material. This kind of filter material is useful, if it is used to pass the air from the coarse side to the high density side since the coarse material filtrates relatively larger foreign materials first and then the last one filtrates any unpermissible foreign materials. When this kind of filter material is used in the apparatus explained above, the coarse side of the material should be faced with the fixing blades 4a to 4e. If the material is so placed in the apparatus, the article obtained would have the coarse side on top of the same and the high density side on the bottom side thereof. When the article is made conical as explained above as another embodiment, the coarse side is the outer surface of the corn and the high density side is the inner side of the corn.

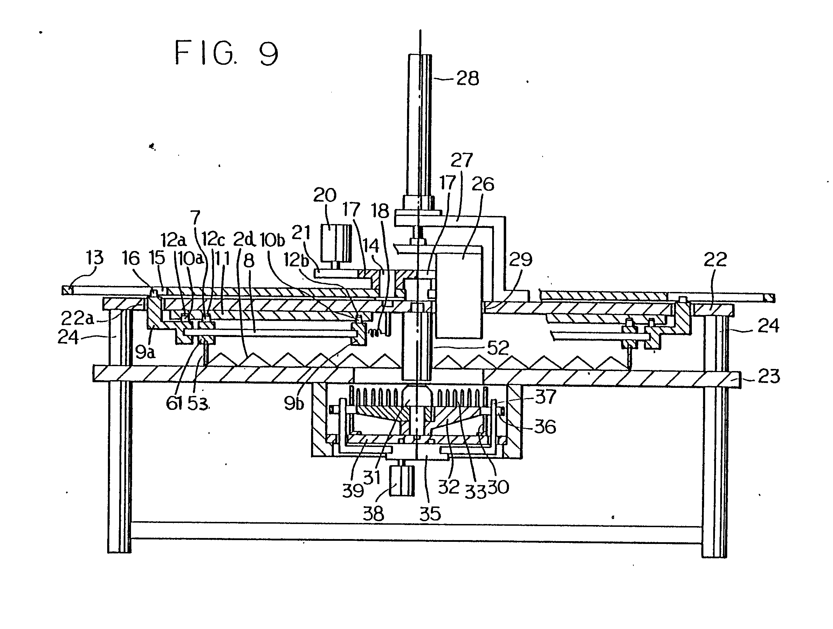

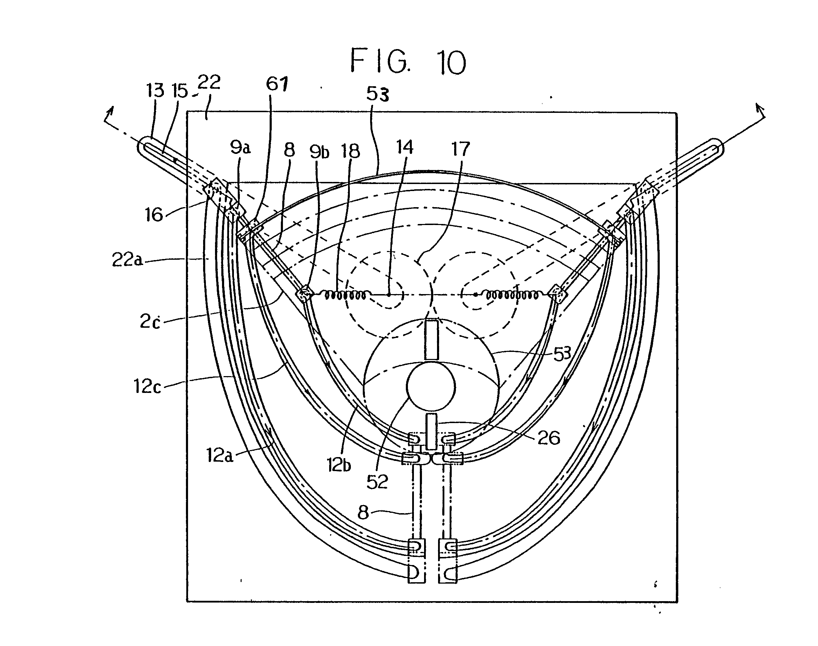

The process and apparatus to make the curved corrugated article circular are explained with reference to Figs. 9 and 10. In Fig. 9, the article previously made is put on a desk 23, and located in contact with the center rod 52. Numeral 53 designates a contouring belt which is curved at its initial position as shown in Fig. 10. The contouring belt 53 is made of a spring material and flexible, therefore it flexes when the ends of the countouring belt 53 is moved toward the center rod 52. The contouring belt 53 is so located that it can embrace the circumference of the article 2d. Numeral 61 designates a contouring belt holder to hold respective end of the contouring belt 53. The countering belt holder 61 has a cam follower 7 on top thereof and made slidable on the guide bar 8. The both ends of the guide bar 8 are supported by guide bar holders 9a and 9b which have cam followers 10a and 10b. Numeral 11 designates a cam plate fixed to the base plate 22. The cam plate 11 has three cam grooves 12a, 12c and 12b. Each of the cam grooves 12a, 12c and 12b receives each of the cam followers 10a, 7 and 10b. The lever 13 is rotated around a pin 14 and has a long hole 15 therein into which the cam follower 16 is engaged. The lever 13 is rotated by a gear 17 which is rotated by another gear 21 fixed to an output shaft of an air cylinder 20 which works to rotate the gear 21. Numeral 18 designates a tension coil which exerts a tensile force to the cam follower 10b. The arrangement as the above is duplicated on the other side of the apparatus in Fig. 9 as confirmed in Fig. 10. To the stands 24 are there fixed base plate 22 and the desk 23.

When the air cylinder 20 is energized to rotate the gears 21 and 17, the lever 13 is rotated counter-clockwise in Fig. 10. At that time the cam follower 16 is pushed by the inner surface of the long hold 15 in the lever 13, therefore the guide bar holder 9a moves counter-clockwise to follow the path 22a which is made through the base plate 22 as shown in Fig. 10. On the other hand the holder 9b is pulled by the tension coil 18 toward the rotational center of the lever 13. When the lever 13 is rotated as the above, the cam follower 10b also rotates along the cam groove 12b. Since the cam follower 16 is guided by the long hole 15 and since the holder 9b is pulled toward the rotational center of the lever 13 and also since the length of the guide bar 8 is fixed, the position and the direction of the guide bar 8 is determinative of the rotational angle of the lever 13. Therefore the position and the direction of the cam follower 7 or fixing blade holder 61 are also determined according to the rotational angle of the lever 13. When the fixing blade holder 61 is moved along the cam groove 12c to the final position shown in dotted line in Fig. 10, the ends of the article 2d meet together to make a round axial-flow filter with reduced diameter. As shown in Fig. 10 when the guide bar 8 comes to a vertical position as shown in dotted line, the process of rounding the article is finished. The above arrangements of cam followers and cam grooves are made in such a way that the both ends of the countering belt 53 trace a line where the curved corrugation 2d is made smaller and simultaneously made circular.

In Fig. 9, numeral 29 designates an aperture made through the base plate 22. A pusher 26 is pushed down through the aperture 29 by the operation of the air cylinder 28 which is supported by a stay 27 fixed to the base plate 22. The article made circular below the pusher 26 is pushed down to the reshaper 30. The reshaper 30 is composed of two divided rotors 32 on which semi-circular teeth 33 are provided. The rotors 32 are rotated by pins 37 which are engaged with long holes 36 made at the ends of the rotors 32.

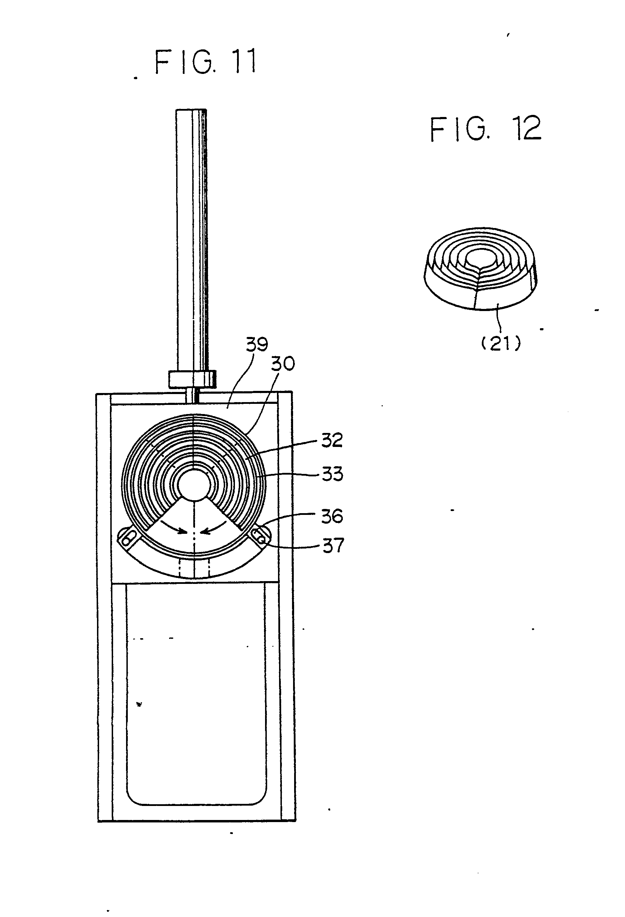

When the air cylinder 38 is actuated, the pins 37 are rotated through gears 35. The semi-circular teeth on the rotors 32 are initially positioned as shown in Fig. 11. However, when the air cylinder 38 is actuated, the teeth 33 or the rotors 32 rotate toward each other, so that the triangular blank shown in Fig. 11 is filled with the semi-circular teeth 33. At this time, the upper or the other ends of the semi-circular teeth 33 are positioned as indicated by dotted line in Fig. 11.

When the grounded article is pushed into the reshaper 30, the grooves thereof mate with the semi-circular teeth at their initial positions, registering the centre hole of the round curved corrugation at the center guide pin 31. At this time the ends of the rounded article are not circular enough as shown in Fig. 12, however when the rotors 32 or semi-circular teeth 33 are rotated as shown in arrows in Fig. 11, the still straight ends of the rounded article are made circular along the circular teeth 33 of the reshaper 30. After the reshaping operation by the reshaper 30 is finished, the reshaper 30 with the reshaped round article is pulled out by the operation of the slide plate 39, so that it could be placed on the following step.

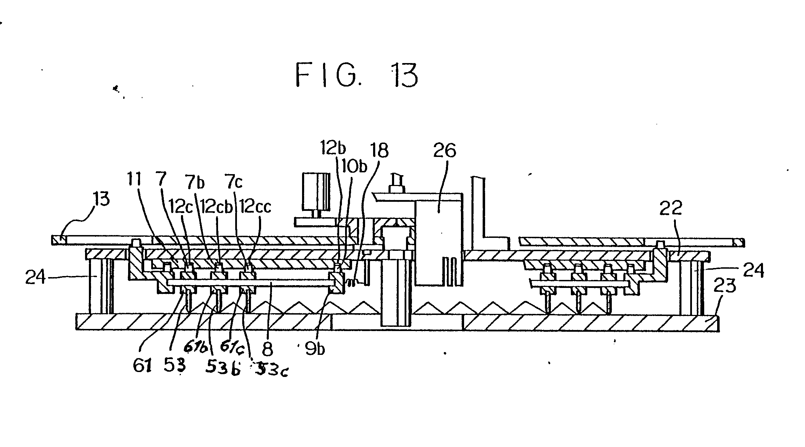

Another embodiment of making the curved corrugated article circular is explained with reference to Fig. 13. In this embodiment, there are three countering belts. In addition to the countering belt holder 61 shown in Fig. 9, are there provided two more countering belt holders 61b and 61c. As to the additional countering belt holders 61b and 61c, there are provided corresponding cam followers 7b and 7c which engage with corresponding cam grooves 12cb and 12cc. Since this apparatus has two more countering belts 53b and 53c in addition to the belt 53 shown in Fig. 9, they can grasp more valleys of the curved corrugated article 2d. This construction is especially suitable when a number of valleys or ridges are made in one article. The number of countering belts of course depends on the particular article or axial-flow filter desired. It has been found that five countering belts are suitable when one makes an axial-flow filter with nine ridges or valleys. In the arrangement of Fig. 13 the pusher 26 must avoid a plurality of countering belts 53, 53b and 53c, therefore it has two slits therein to successfully push down the rounded article made therebelow.

As explained above the method and apparatus of the present invention to make axial-flow filters are suitable to massproduce the filters fast with stability. Especially it is possible to produce various kinds of axial-flow filters whose heights are different from each other and where the number of valleys or ridges differ from each other in a single apparatus.

**Claims**

1. A method for making a curved, corrugated article from a flat sheet of material comprising the steps of:

preparing said flat sheet (2) of material,

preparing a mold (3) having a curved wavy surface arranging said flat sheet (2) on the wavy surface of said mold (3),

preparing a set of fixing blades (4a—4e) above said sheet, each of said fixing blades mating with each of the bottom edges of said curved wavy surface when moved to said wavy surface and

moving said set of blades (4a—4e) toward ssaid wavy surface, characterised in that:

an end of said flat sheet (2) is fixed to a curved end of said mold (3) so that the sheet is curved to become concave upward and inclined up over said curved wavy surface of said mold, and

that said set of blades (4a—4e) is moved toward said wavy surface for making said flat sheet into mating relation with the bottom of a valley in said wavy surface consecutively beginning with that blade (4a) closest to said fixed end of said flat sheet so that said flat sheet fixed by the closest blade (4a) is still curved to be concave upward and inclined up over said wavy surface to which successive blades mate.

2. A method as claimed in claim 1, comprising the step of:

pressing the curved top edges of the article (2d) by a heater (51) for rigidifying.

3. A method as claimed in claim 1 or 2, comprising the steps of:

heating said mold (3) for fixing the shape of the article.

4. A method as claimed in claim 3, wherein:

said flat sheet (2) of material is fan-shaped with two curved edges (2b) and two tapered side edges (2c), and made of filter material, one of said two curved edges being fixed to said mold (3).

5. A method for making an axial-flow filter using an article produced according to claim 4, comprising the steps of:

positioning a center rod (52) close to the inner curved end of said article (2d),

positioning a contouring belt (53) over the outer curved end of said article (2d) and

moving said contouring belt (53) toward center rod (52) in such a manner that said belt makes a circle around said center rod, said article being made circular between said belt and said center rod.

6. A method as claimed in claim 5, comprising the step of:

locating a reshaper (30) having circular teeth (33) which mate with valleys of said circular-made article at a disconnected portion for reshaping the ends of said circular-made article.

7. An apparatus for making a curved corrugated article from a flat sheet of material comprising:

a mold (3) having a wavy curved surface on one side thereof which corresponds to said curve corrugated article in shape,

a set of fixing blades (4a—4e) located above said mold (3) and

a means (8a—8e) for moving the fixing blades (4a—4e) toward said wavy curved surface of the mold (3) characterized in that:

said mold (3) has a sloped and curved inner end (3b),

a means (14) for fixing an end of said flat sheet (2) on said inner end (3b) of said mold (3) is provided which means (14) fixes the end of said flat sheet (2) on said sloped and curved inner end (3b) of said mold in such a manner that said flat sheet (2) is curved along said inner end to become concave upward and slanted up over said curved wavy surface of said mold continuously and

said fixing blade moving means (8a—8e) moves the fixing blade (4a) closest to said end fixing·means (14) and remaining fixing blades (4b—4e) consecutively so that said flat sheet fixed by a part of the fixing blades is still curved to be concave upward and inclined up over said wavy surface to which the remaining part of the fixing blades mate.

8. An apparatus as claimed in claim 7, wherein:

said set of fixing blades (4a—4e) is so located that each blade is consecutively raised from the one closest to said end fixing means (14) to the one farthest from said end fixing means, and said set of fixing blades is moved all together toward said wavy curved surface so that each of said fixing blades (4a—4e) is consecutively pressed down to a bottom edge of a valley of said wavy curved surface.

9. An apparatus as claimed in claim 8 comprising:

a set of heaters (51) located between said fixing blades (4a—4e) respectively for pressing top edges of the article (2d) formed between said wavy curved surface and said fixing blades, and another set of heaters placed in association with said mold for heating the same.

10. An apparatus for making an axial-flow filter from an article as specified in claim 4, comprising:

a center rod (52) located close to the inner end of the article (2d),

a contouring belt (53) located around the outer end of the article for embracing the same, a means (61) for grasping each end of said contouring belt, and

a means (81, 12a—12c) for moving said grasping means (61) along a predetermined path so that said contouring belt (53) makes a circle around said center rod with the article made circular therebetween.

11. An apparatus as claimed in claim 10 comprising:

a supporting belt (61b, 61c) located inside of said contouring belt (61) to mate with a valley of the article (2d) for bending the article together with said contouring belt to a circular axial-flow filter.

12. An apparatus as claimed in claim 10 or 11 comprising:

a reshaper (30) having semi-circular teeth (33) therein for receiving the article made circular, mating respective valleys of said article and said teeth in order that the ends of said article are reshaped by said semi-circular teeth.

## Patentansprüche

1. Verfahren zum Herstellen eines gekrümmten, wellenförmigen Artikels aus einer flachen Materialbahn mit folgenden Schritten:

Vorbereiten der flachen Materialbahn (2),

Vorbereiten einer Form (3) mit einer gekrümmten wellenförmigen Oberfläche,

Anordnen der flachen bahn (2) auf der gewellten Oberfläche der Form (3),

Vorbereiten eines Satzes von Fixierblättern (4a—4e) über der Bahn, wobei jeweils ein Fixierblatt auf eine Unterkante der gekrümmten, wellenförmigen Oberfläche trifft, wenn die Fixierblätter gegen die wellenförmige Oberfläche bewegt werden, und

Bewegen diese Satzes von Blätten (4a—4e) in Richtung auf die wellenförmige Oberfläche, dadurch gekennzeichnet,

daß ein Ende der flachen Bahn (2) an einem gekrümmten Ende der Form (3) so fixiert wird, daß die Bahn gekrümmt wird, damit sie nach oben konkav und über die gekrümmte, wellenförmige Oberfläche der Form nach oben geneigt wird, und

daß der Satz von Blättern (4a—4e) in Richtung auf die wellenförmige Oberfläche bewegt wird, damit die flache Bahn nach und nach am Boden einer Vertiefung in der wellenförmigen Oberfläche zum Anliegen kommt, beginnend mit dem Blatt (4a), das dem befestigten Ende der flachen Bahn am nächsten liegt, so daß die durch das nächstliegende Blatt (4a) fixierte flache Bahn noch so gekrümmt ist, daß sie nach oben konkav und über die wellenförmige Oberfläche nach oben geneigt ist, auf der nacheinander die Blätter zum Anliegen kommen.

2. Verfahren nach Anspruch 1, mit dem Schritt des Pressens der gekrümmten oberen Kante des Artikels (2d) durch einen Heizer (51) zur Verfestigung.

3. Verfahren nach Anspruch 1 oder 2, mit dem Schritt des Heizens der Form (3) zur Fixierung der Form des Artikels.

4. Verfahren nach Anspruch 3, wobei die flache Materialbahn (2) mit zwei gekrümmten Rändern (2b) und zwei schräg zueinander verlaufenden Seitenrändern (2c) fächerförmig geformt ist und aus Filtermaterial besteht, wobei einer der zwei gekrümmten Ränder an der Form (3) fixiert wird.

5. Verfahren zum Herstellen eines axial durchströmten Filters unter Verwendung eines Artikels hergestellt nach Anspruch 4 mit den Schritten des Positionierens eines mittigen Stabes (52) nahe am inneren gekrümmten Ende des Gegenstandes (2d), des Positionierens eines formgebenden Bandes (53) über das äußere gekrümmte Ende des Artikels (2d) und des Bewegens des formgebenden Bandes (53) in Richtung auf den mittigen Stab (52) in der Weise, daß das Band um die mittige Stange einen Kreis bildet, wobei der Artikel zwischen mittiger Stange und Band kreisförmig gemacht wird.

6. Verfahren nach Anspruch 5, mit dem Schritt des Anbringens eines Nachformers (30) mit kreisförmigen Rippen (33), die mit den Vertiefungen des kreisförmig geformten Artikels auf einem nicht verbundenen Abschnitt in Eingriff treten, um die Enden des kreisförmig geformten Artikels nachzuformen.

7. Vorrichtung zum Herstellen eines gekrümmten, wellenförmigen Artikels aus einer flachen Materialbahn, mit einer Form (3) mit einer wellenförmigen, gekrümmten Oberfläche auf einer Seite, die in der Formgebung dem gekrümmten wellenförmigen Artikel entspricht, einem Satz von Fixierblättern (4a—4e) über der Form (3) und mit einer Einrichtung (8a—8e) zum Bewegen der Fixierblätter (4a—4e) in Richtung auf die wellenförmige gekrümmte Oberfläche der Form (3), dadurch gekennzeichnet, daß die Form (3) ein abgeschrägtes und gekrümmtes inneres Ende (3b) aufweist, das eine Einrichtung (14) zum Fixieren eines Endes der flachen Bahn (2) an dem Innenende (3b) der Form (3) vorgesehen ist, die das Ende der flachen Bahn (2) an dem abgeschrägten und gekrümmten Innenende (3b) der Form in der Weise fixiert, daß die flache Bahn (2) längs dieses Innenendes gekrümmt wird, damit sie kontinuierlich nach oben konkav und über die gekrümmte, wellenförmige Oberfläche der Form nach oben geneigt wird, wobei die Bewegungseinrichtung (8a—8e) für die Fixierblätter das Fixierblatt (4a), das der Endfixiereinrichtung (14) am nächsten liegt, und die restlichen Fixierblätter (4b—4e) nacheinander bewegt, so daß die durch ein Teil der Fixierblätter fixierte flache Bahn noch so gekrümmt ist, daß sie nach oben konkav und über die wellenförmige Oberfläche nach oben geneigt ist, mit der der restliche Teil der Fixierblätter in Eingriff tritt.

8. Vorrichtung nach Anspruch 7, wobei der Satz von Fixierblättern (4a—4e) so angeordnet ist, daß jedes Blatt nacheinander von dem einen, das der Endfixiereinrichtung (14) am nächsten ist, zu dem einen, das von der Endfixiereinrichtung am weitesten abliegt, angehoben wird, wobei dieser Satz von Fixierblättern insgesamt in Richtung auf die gekrümmte, wellenförmige Oberfläche bewegt wird, so daß jedes der Fixierblätter (4a—4e) nacheinander nach unten in die Bodenkante einer Vertiefung der wellenförmigen, gekrümmten Oberfläche gedrückt wird.

9. Vorrichtung nach Anspruch 8, mit einem Satz von Heizern (51), die jeweils zwischen den Fixierblättern (4a—4e) zum Pressen der oberen Kanten des Artikels (2d), die zwischen der gekrümmten, wellenförmigen Oberfläche und den Fixierblättern ausgebildet sind, angeordnet sind, wobei ein anderer Satz von Heizen in Zuordnung zu der Form zum Aufheizen von dieser vorgesehen ist.

10. Vorrichtung zum Herstellen eines axial durchströmten Filters aus einem Artikel nach Anspruch 4, mit einem mittigen Stab (52), der nahe am Innenende des Artikels (2d) angeordnet ist, einem formgebenden Band (53), das um das äußere Ende des Artikels angeordnet ist, um dieses zu umfassen, mit einer Einrichtung (61) zum Greifen jedes Endes dieses formgebenden Bandes und mit einer Einrichtung (81, 12a—12c) zum Bewegen dieser Greifeinrichtung (61) längs einer vorbestimmten Bahn, so daß das formgebende Band (53) einen Kreis um die mittige Stange bildet, wobei der Artikel dazwischen kreisförmig gemacht wird.

11. Vorrichtung nach Anspruch 10, mit einem Tragband (61b, 61c), das auf der Innenseite des formgebenden Bandes (61) angeordnet ist, um mit einer Vertiefung des Artikels (2d) zum Biegen des Gegenstandes zusammen mit dem formgebenden Band zu einem kreisförmigen, axial durchströmten Filter in Eingriff tritt.

12. Vorrichtung nach Anspruch 10 oder 11, mit einem Nachformer (30) mit halbkreisförmigen Rippen (33) zur Aufnahme des kreisförmig geformten Artikels, wobei jeweils Vertiefungen des Artikels und Rippen in Eingriff treten, damit die Enden des Artikels durch die halbkreisförmigen Rippen nachgeformt werden.

**Revendications**

1. Procédé pour fabriquer un article incurvé ondulé, à partir d'une feuille plate de matériau, comprenant les étapes consistant à:
—préparer la feuille plate (2) de matériau,
—préparer un moule (3) ayant une surface ondulée incurvée,
—disposer la feuille plate (2) sur la surface ondulée du moule (3),
—préparer un jeu de lames de fixation (4a—4e) sur la feuille, chacune des lames de fixation étant appariée à chacun des bords inférieurs de la surface ondulée incurvée lorsqu'elle se déplace ers la surface ondulée, et
—déplacer le jeu de lames (4a—4e) vers la surface ondulée, caractérisé en ce que:
—une extrémité de la feuille plate (2) est fixée à une extrémité incurvée du moule (3) de sorte que la feuille est incurvée pour devenir concave dans la direction du haut et inclinée vers le haut sur la surface ondulée incurvée du moule, et
—en ce que le jeu de lames (4a—4e) est déplacé vers la surface ondulée afin de faire en sorte que la feuille plate soit en relationn appariée avec le fond d'un creux de la surface ondulée de façon consécutive en commençant avec la lame (4a) la plus proche de l'extrémité fixe de la feuille plate de sorte que la feuille plate fixée par la lame la plus proche (4a) reste incurvée pour être concave dans la direction du haut et inclinée vers le haut au-dessus de la surface ondulée avec laquelle les lames successives sont appariées.

2. Procédé de fabrication selon la revendication 1, comprenant l'étape consistant à:
—comprimer les bords supérieurs incurvés de l'article (2d) par un élément chauffant (51) pour les rendre rigides.

3. Procédé selon la revendications 1 ou 2, comprenant l'étape consistant à:

—chauffer le moule (3) pour fixer la forme de l'article.

4. Procédé selon la revendication 3, dans lequel:
—la feuille plate (2) de matériau est mise sous la forme d'un éventail avec deux bords incurvés (2b) et deux bords latéraux chanfreinés (2c) et est constituée d'un matériau filtrant, l'un des deux bords incurvés étant fixé au moule (3).

5. Procédé de fabrication d'un filtre à écoulement axial utilisant un article produit selon la revendication 4, comprenant les étapes consistant à:
—placer une tige centrale (52) à proximité de l'extrémité intérieure incurvée de l'article (2d),
—placer une courroie de contournage (53) sur l'extrémité extérieure incurvée de l'article (2d), et
—déplacer la courroie de contournage (53) vers la tige centrale (52) de façon que la courroie fasse un cercle autour de la tige centrale, l'article étant rendu circulaire entre la courroie et la tige centrale.

6. Procédé selon la revendication 5, comprenant l'étape consistant à:
—placer un outil de refaçonnage (30) ayant des dents circulaires (33) qui sont appariées aux creux de l'article rendu circulaire à une partie déconnectée afin de refaçonner les extrémités de l'article rendu circulaire.

7. Dispositif pour fabriquer un article ondulé incurvé à partir d'une feuille plate de matériau, comprenant:
—un moule (3) ayant une surface incurvée ondulée sur l'un des ses côtés qui correspond en forme à l'article ondulé incurvé,
—un jeu de lames de fixation (4a—4e) situées au-dessus du moule (3) et
—un moyen (8a—8e) pour déplacer les lames de fixation (4a—4e) vers la surface incurvée ondulée du moule (3), caractérisé en ce que:
—le moule (3) a une extrémité intérieure inclinée et incurvée (3b),
—un moyen (14) pour fixer une extrémité de la feuille plate (2) sur l'extrémité intérieure (3b) du moule (3) est prévu, moyen (14) qui fixe l'extrémité de la feuille plate (2) sur l'extrémité intérieure inclinée et incurvée (3b) du moule d'une manière telle que la feuille plate (2) est incurvée le long de l'extrémité intérieure pour devenir concave dans la direction du haut et inclinée vers le haut au-dessus de la surface ondulée incurvée du moule de façon continue et
—le moyen (8a—8e) de déplacement des lames de fixation rapproche la lame de fixation (4a) le plus près possible du moyen de fixation d'extrémité (14) et les autres lames de fixation (4b—4e) de façon consécutive de sorte que le feuille plate fixée par une partie des lames de fixation reste incurvée de manière à être concave dans la direction du haut et inclinée vers le haut au-dessus de la surface ondulée à laquelle la partie restante des lames de fixation est appariée.

8. Dispositif selon la revendication 7, dans lequel:
—le jeu de lames de fixation (4a—4e) est placé de façon que chaque lame soit consécutivement soulevée de celle qui est la plus proche du moyen de fixation d'extrémité (14) jusqu'à celle qui est la plus éloignée de ce moyen de fixation d'extrémité, et le jeu de lames de fixation est déplacé en totalité vers la surface incurvée ondulée de sorte que chacune des lames de fixation (4a—4e) est consécutivement comprimée sur un bord inférieur d'un creux de la surface incurvée ondulée.

9. Dispositif selon la revendication 8, comprenant:

—un jeu d'éléments chauffants (51) placé entre les lames de fixation (4a—4e) respectivement pour comprimer les bords supérieurs de l'article (2d) formé entre la surface incurvée ondulée et les lames de fixation, et un autre jeu d'éléments chauffants placé en association avec le moule pour chauffer celui-ci.

10. Dispositif pour la fabrication d'un filtre à écoulement axial à partir d'un article tel que spécifié en revendication 4, comprenant:

—une tige centrale (52) placée à proximité de l'extrémité intérieure de l'article (2d),

—une courroie de contournage (53) située autour de l'extrémité extérieure de l'article pour l'embrasser,

—un moyen (61) pour la préhension de chaque extrémité de la courroie de contournage, et

—un moyen (81, 12a—12c) pour déplacer le moyen de préhension (61) suivant un trajet prédéterminé de sorte que la courroie de contournage (53) fait un cercle autour de la tige centrale avec l'article rendu circulaire entre eux.

11. Dispositif selon la revendication 10, comprenant:

—une courroie de support (61b, 61c) située à l'intérieur de la courroie de contournage (61) pour être appariée à un creux de l'article (2d) afin de cambrer l'article en même temps que la courroie de contournage pour obtenir un filtre circulaire à écoulement axial.

12. Dispositif selon la revendication 10 ou 11, comprenant:

—un outil de refaçonnage (30) ayant des dents semi-circulaires (33) pour recevoir l'article rendu circulaire, accouplant les creux respectifs de l'article et les dents de façon que les extrémités de l'article soient refaçonnées par les dents semi-circulaires.

FIG. 1

FIG. 2

FIG. 3

FIG. 4

FIG. 5

FIG. 6

FIG. 7

4e

4d

2

4c

4b

4a

14

3

FIG. 8

31

32

6

FIG. 9

EP 0 200 798 B1

FIG. 10

FIG. 11

FIG. 12

(21)

39
30
32
33
36
37

EP 0 200 798 B1

# FIG. 13